# EUROPÄISCHE PATENTSCHRIFT

(11) **EP 3 026 412 B1**
(45) Veröffentlichungstag und Bekanntmachung des Hinweises auf die Patenterteilung: **28.02.2018**
(21) Anmeldenummer: 15196657.9
(22) Anmeldetag: 27.11.2015
(51) Int. Cl.: G01L 7/16, F15B 11/024, F16K 37/00, F16K 7/12

(54) **DRUCKANZEIGEEINRICHTUNG**
PRESSURE INDICATION DEVICE
DISPOSITIF D'AFFICHAGE DE MESURE

(30) Priorität: 28.11.2014 DE 102014017548
(43) Veröffentlichungstag der Anmeldung: 01.06.2016
(73) Patentinhaber: Samson AG, 60314 Frankfurt (DE)
(72) Erfinder: BOHLIEN, Werner, 63179 Obertshausen (DE)
(74) Vertreter: Puschmann Borchert Bardehle Patentanwälte Partnerschaft mbB

(56) Entgegenhaltungen:
- DE-A1- 4 328 617
- DE-A1-102010 045 564
- DE-C2- 3 532 755
- DE-U1- 8 801 016
- US-B1- 8 573 046

## Beschreibung

Die Erfindung betrifft eine Druckanzeigeeinrichtung zur Anzeige eines Drucks über einem Schwellwert nach dem Oberbegriff des Anspruchs 1.

Die DE 35 32 755 C2 offenbart ein flüssigkeitsgefülltes Druckmessgerät, bei dem ein von einer Druckflüssigkeit beaufschlagtes Messglied mit Hilfe einer für Luft durchlässigen Membran auf Atmosphärendruck eingestellt wird.

Die DE 88 01 016 U1 offenbart eine Unterdruckanzeigeeinrichtung mit einem von einer Gummimembran abgedeckten Kolbenfläche.

Ferner ist eine Druckanzeigeeinrichtung zur Anzeige eines Drucks über einem Schwellwert eines in einem ersten System befindlichen Fluides bekannt, wobei die Druckanzeigeeinrichtung einen einfach wirkenden Zylinder umfasst, der Anschlussmittel aufweist, um mit einem ersten System fluidisch verbunden zu werden. In dem Zylinder ist ein Kolben in axialer Richtung vorgespannt verfahrbar aufgenommen, wobei das Fluid auf die Kolbenfläche wirken kann. Der Schwellwert, ab welchem eine Druckanzeige erfolgt, kann durch die Kolbenfläche und Vorspannung eingestellt werden. Wird der Kolben aus seiner Inertiallage herausbewegt, kann auf diese Weise festgestellt werden, dass ein Druck vorliegt, der über dem eingestellten Schwellwert liegt.

Es ist Aufgabe der Erfindung, eine medienselektive Druckauswertung vorzunehmen.

Die Erfindung wird durch die kennzeichnenden Merkmale des Anspruchs 1 in Verbindung mit seinen Oberbegriffsmerkmalen gelöst.

Die Unteransprüche bilden vorteilhafte Ausgestaltungen der Erfindung.

In bekannter Weise umfasst eine Druckanzeigeeinrichtung zur Anzeige eines Drucks über einem Schwellwert eines in einem ersten fluidischen System befindlichen Fluides einen einfach wirkenden Zylinder. Die Druckanzeigeeinrichtung weist Anschlussmittel auf, um mit einem ersten System fluidisch verbunden zu werden. In dem Zylinder ist ein Kolben in axialer Richtung vorgespannt verfahrbar aufgenommen, wobei das Fluid auf die Kolbenfläche wirken kann. Der Schwellwert, ab welchem eine Druckanzeige erfolgt, kann durch die Größe der Kolbenfläche und Vorspannung eingestellt werden.

Erfindungsgemäß weist der Kolben in seiner Kolbenfläche eine mit einem zweiten System kommunizierende Öffnung auf. Ferner umfasst der Kolben eine für ein erstes Fluid undurchlässige, nämllich flüssigkeitsundurchlässige, aber für ein zweites Fluid durchlässige, nämlich gasoffene Membran, die das erste und das zweite System voneinander trennt. Die Membran deckt die Öffnung ab.

Aufgrund der Membran kann so ein Flüssigkeitsdruck im ersten System gemessen werden, wohingegen eine Gaszufuhr zu keiner Druckerhöhung führt, da diese über die Membran in das zweite fluidische System abgeführt werden kann. Überschreitet der Flüssigkeitsdruck den voreingestellten Schwellwert, wird dies durch die Verschiebung des Kolbens angezeigt.

Gemäß einer ersten vorteilhaften Ausgestaltung ist vorgesehen, dass die Membran offen für Luft, aber undurchlässig für Wasser oder Öl ist.

Dadurch kann die Überwachung gängiger Medien erfolgen. Eine entsprechende Membran ist beispielsweise unter dem Markennamen "GoreTex" bekannt.

Eine Überwachungsaufgabe kann beispielsweise in einer Füllstandsüberwachung liegen oder in einer Behälterdichtigkeit. Liegt beispielsweise ein Behälter innerhalb eines zweiten Behälters, wobei der Zwischenraum mit Gas gefüllt ist, kann bei Undichtigkeit des inneren Behälters das Eintreten von Flüssigkeit in den Zwischenraum angezeigt werden.

In einer ersten vorteilhaften Ausgestaltung mündet die Öffnung in der Kolbenfläche in einen axialen Kanal in der Kolbenstange.

Die Kolbenstange kann mit einem zweiten System verbunden sein, das unabhängig vom ersten System ist oder mit dem ersten System kommuniziert.

In einer besonders vorteilhaften Ausgestaltung kann das zweite System die Umgebung/Atmosphäre sein. Gemäß dieser Ausgestaltung kann die Kolbenstange auf einfache Weise als gegenüber der Atmosphäre offenes Hohlrohr ausgebildet sein. Dies stellt eine besonders einfache Form eines zweiten Anschlusses dar.

Ferner kann das zweite System kommunizierend mit dem ersten System ausgebildet sein. Dies bedeutet, dass bei einem abgeschlossenen Gasvolumen im ersten System, das über die Membran austretende Gas wieder über eine Leitung in das erste System rückgeführt werden kann.

Im Falle eines Doppeltanks kann beispielsweise der Druckanzeiger in Gewichtskraftrichtung weiter unten angebracht sein als die Leitung, die das Gas in den Zwischenraum zurückführt. Die Leitung ist erfindungsgemäß derart ausgestaltet, dass eine Bewegung des Kolbens nach wie vor möglich ist, um durch seine Verschiebung einen Druckanstieg zu signalisieren.

Gemäß einer weiteren vorteilhaften Ausgestaltung kann vorgesehen sein, dass das erste System eine Kammer zwischen zwei Membranen einer Doppelmembran eines Stellventil-Membranantriebs ist. In dieser Ausgestaltung kann das zweite System durch die Atmosphäre gebildet werden.
Bei einem Doppelmembranantrieb sind zwei redundante Membranen vorgesehen. Bei Bersten einer Membran führt dies zu einem Druckanstieg des ursprünglich von der intakten Membran abgetrennten, insbesondere flüssigen Fluids. Dieser Druckanstieg des flüssigen Fluids wird dann durch Verschiebung des Kolbens angezeigt. Kleinere Gasdruckschwankungen im Zwischenraum können durch die Membran ausgeglichen werden ohne zu einer Anzeige zu führen.

Insbesondere wird die Vorspannung durch eine Spiralfeder erzeugt, die auf die Kolbenringfläche wirkt und sich gegen den Zylinder abstützt. Dies stellt eine besonders einfache und bewährte Art der Vorspannung eines einfach wirkenden Zylinders dar. Über die Federwerte kann in Abhängigkeit der Kolbenfläche auf einfache Weise der Anzeige-Schwellwert voreingestellt werden.

Entsprechend einer besonders einfachen Ausführungsform kann die Kolbenstange selbst als Anzeigeelement dienen, so dass bei komprimiertem Vorspannelement die Kolbenstange einen außerhalb des Zylinders sichtbaren Bereich bildet. Bei Sichtbarkeit des Bereichs kann auf eine Überschreitung des eingestellten Mediendrucks geschlossen werden.

Gemäß einer weiteren Ausführung kann das Anzeigeelement einen Sensor, insbesondere einen magnetischen, induktiven, kapazitiven Sensor, und / oder einen Schalter, insbesondere einen Reed-Schalter umfassen, der die Bewegung des Kolbens in ein elektrisches Signal wandelt. Ferner kann das Anzeigeelement elektrisch gesteuerte Anzeigemittel umfassen, wie beispielsweise akustische oder optische Anzeigen, wie ein Display oder eine LED. Die Anzeigemittel geben insbesondere den von dem Sensor und / oder Schalter detektierten Position entsprechend wieder. Ferner kann die Positionsinformation auch an ein übergeordnetes Steuersystem übertragen werden.

Eine weitere vorteilhafte Ausgestaltung wird bereitgestellt, indem ein Rastmittel vorgesehen ist, das mit dem Kolben derart zusammenwirkt, dass dieser in einem Anzeige-Zustand arretiert wird und damit auch bei Druckabnahme im Anzeige-Zustand verbleibt.

Gemäß einem weiteren Aspekt der Erfindung ist eine Stellarmatur umfassend einen Membranantrieb vorgesehen, der wenigstens eine mit einer Ventilstange verbundene Antriebsmembran aufweist, die eine Antriebskammer, die mit einem Antriebsfluid beaufschlagbar ist und eine durch die Antriebsmembran abgetrennte zweite Kammer aufweist, deren Volumen mit einer Druckanzeigeeinrichtung gemäß einem der vorangehenden Ansprüche fluidisch verbunden ist.

In einer vorteilhaften Weiterbildung kann die zweite Kammer zwischen einer ersten Antriebsmembran und einer zweiten Antriebsmembran gebildet sein, deren Volumen mit einer Druckanzeigeeinrichtung gemäß einer der vorangehenden Ausgestaltungen fluidisch verbunden ist. So kann nach Bruch der ersten Antriebsmembran ein Defekt angezeigt werden und dennoch über die zweite Antriebsmembran der Betrieb der Stellarmatur gewährleistet werden.

Wie zuvor beschrieben kann die Membran das Zylindervolumen gegenüber der Umgebung/Atmosphäre abdichten, wodurch ein Gasdruckausgleich/Luftdruckausgleich in der Kammer erfolgen kann. Erfolgt ein Bersten der Membran, führt dies zu einem wirksamen Druckanstieg durch Eindringen des flüssigen Fluids in den Kammerbereich. Das Bersten einer Membran kann auf diese Weise zuverlässig detektiert werden und entsprechende Reparaturmaßnahmen können ergriffen werden.

Insbesondere ist der Membranantrieb ein hydraulischer Membranantrieb. Die Hydraulikflüssigkeit kann Wasser oder Öl sein.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Druckanzeigeeinrichtung nach dem Stand der Technik;
- Fig. 2: eine erfindungsgemäße Druckanzeigeeinrichtung, und
- Fig. 3: ein Stellventil zur Membranbruchanzeige.

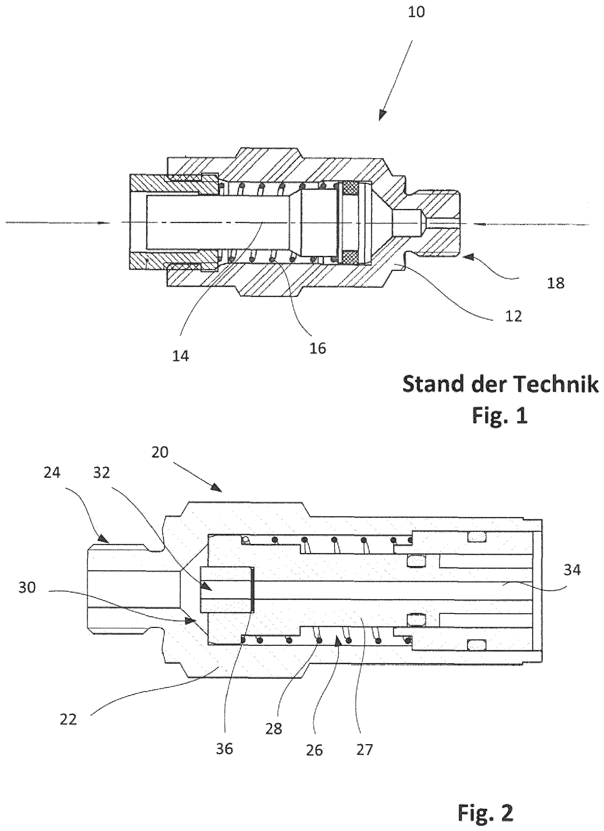

Fig. 1 zeigt eine Druckanzeigeeinrichtung 10 nach dem Stand der Technik. Die Druckanzeigeeinrichtung 10 umfasst einen Zylinder 12 und einen Kolben 14, der durch eine Feder 16 vorgespannt axial beweglich im Zylinder 12 gelagert ist. Über einen Anschluss 18 ist der Zylinder 12 fluidisch mit einem ersten Volumen verbindbar. Das zweite Ende des Zylinders 12 ist mit einem zweiten Volumen, der Umgebung, verbunden. Es ist in der vorgespannten Position des Kolbens 14 aufgrund Leckage eine Kommunikation des ersten und zweiten Volumens möglich. Bei schnellem Druckanstieg im ersten Volumen wird der Kolben 14 gegen die Feder 16 verschoben und zeigt durch herausragen des Kolbens 14 aus dem Zylinder 12 einen Druck an, der größer ist als der durch die Feder 16 eingestellte Schwellwert. Im verschobenen Zustand dichtet der Kolben 14 das erste Volumen gegen die Umgebung ab.

Fig. 2 zeigt eine erfindungsgemäße Druckanzeigeeinrichtung 20. Die Druckanzeigeeinrichtung 20 umfasst einen Zylinder 22, der einen Anschluss 24 zum fluidischen Anschluss an ein erstes Volumen aufweist. Ferner weist die Druckanzeigeeinrichtung 20 einen Kolben 26 auf, der gegen eine Feder 28, insbesondere eine Spiralfeder, axial verfahrbar gelagert ist. Über die Feder 28 kann der zur Verschiebung des Kolbens 26 durch das auf seine Kolbenfläche 30 wirkende erste Fluid eingestellt werden. In die Kolbenfläche 30 ist eine Öffnung 32 eingebracht, die über einen Kanal 34 in der Kolbenstange 27 den Zylinderinnenraum und somit ein erstes Volumen mit einem zweiten Volumen, insbesondere der Atmosphäre, verbindet. Im Übergang von erstem Volumen zu Atmosphäre weist der Kolben 26 eine Membran 36 auf, die gegenüber dem ersten Fluid, insbesondere einer Flüssigkeit, dicht ist und gegenüber einem zweiten Fluid Luft durchlässig ist. Auf diese Weise kann im Zylinderinnenraum vom ersten Fluid ein Druck gegen die Kolbenfläche 30 aufgebaut werden, wohingegen die Durchlässigkeit der Membran bezüglich des zweiten Fluids Luft einen Druckaufbau, insbesondere bei geringen Druckschwankungen, verhindert. Wie auch im Stand der Technik bekannt, wird bei Überschreiten des durch die Feder 28 voreingestellten Druckwerts der Kolben 26 aus dem Zylindergehäuse geschoben, um so die Überschreitung des Druckwerts anzuzeigen. Auf diese Weise kann eine einfach medienselektive Druckanzeige vorgenommen werden.

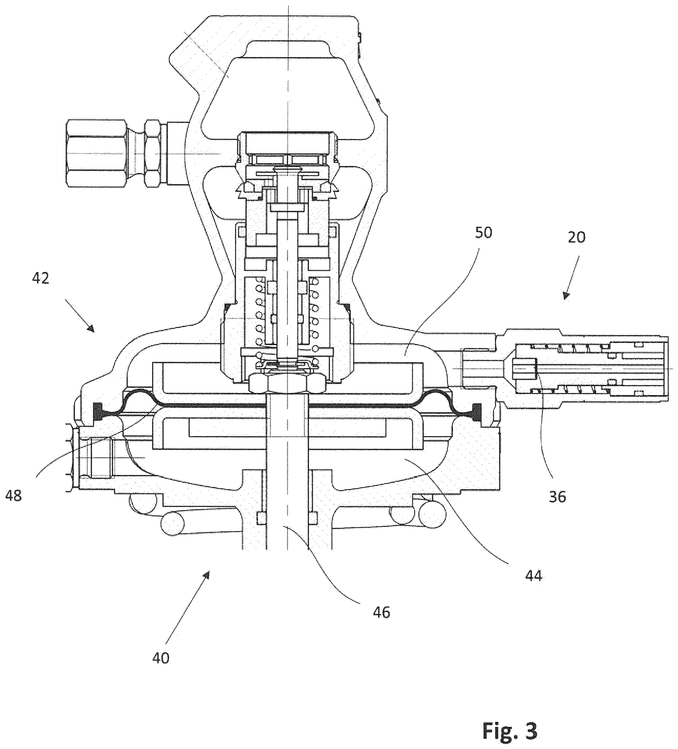

Fig. 3 zeigt ausschnittsweise eine Stellarmatur 40 mit einem Membranantrieb 42. Der Membranantrieb 42 umfasst eine Antriebskammer 44, die mit einer Flüssigkeit, insbesondere Wasser, gefüllt ist. Durch die Erhöhung des Flüssigkeitsdrucks in der Antriebskammer 44 kann ein mit der Antriebsmembran 48 verbundenes Stellglied 46 verfahren werden. Auf der der Antriebskammer 44 gegenüberliegenden Seite der Antriebsmembran 48 liegt eine zweite Kammer 50, die mit Luft gefüllt ist. Eine erfindungsgemäße Druckanzeigeeinrichtung 20, wie in Fig. 2 beschrieben, ist fluidisch mit der zweiten Kammer 50 verbunden. Durch die vorbeschriebenen Eigenschaften der Membran 36 kann in der zweiten Kammer 50 ein Luftaustausch mit der Atmosphäre erfolgen. Erleidet nun die Antriebsmembran 48 eine Beschädigung, kann die Flüssigkeit, insbesondere Wasser, in die zweite Kammer 50 strömen. Da die Membran 36 des Druckanzeigeelements jedoch undurchlässig für Flüssigkeit ist, wird der Kolben 26 verfahren und zeigt die Beschädigung der Antriebsmembran 48 wie in Fig. 2 beschrieben an.

Erfindungsgemäß kann so auf einfache und zuverlässige Aussage über die Beschädigung einer Antriebsmembran getroffen werden.

### Bezugszeichenliste

- 10: Druckanzeigeeinrichtung
- 12: Zylinder
- 14: Kolben
- 16: Feder
- 18: Anschluss
- 20: Druckanzeigeeinrichtung
- 22: Zylinder
- 24: Anschluss
- 26: Kolben
- 28: Feder
- 30: Kolbenfläche
- 32: Öffnung
- 34: Kanal
- 36: Membran
- 40: Stellarmatur
- 42: Membranantrieb
- 44: Antriebskammer
- 46: Ventilstange
- 48: Antriebsmembran
- 50: zweite Kammer

## Patentansprüche

1. Druckanzeigeeinrichtung (20) zur Anzeige eines Drucks in einem ersten fluidischen System, wobei die Druckanzeigeeinrichtung (20) einen ersten Anschluss (24) aufweist, um mit dem ersten System fluidisch verbunden zu werden, ferner umfasst die Druckanzeigeeinrichtung (20) einen Zylinder (22), in dem ein Kolben (26) in axialer Richtung vorgespannt verfahrbar aufgenommen ist, wobei ein im ersten fluidischen System befindliches Fluid auf die Kolbenfläche (30) wirken kann, wobei der Kolben (26) in seiner Kolbenfläche (30) eine Öffnung (32) aufweist, die über einen zweiten Anschluss mit einem zweiten System kommunizierend verbindbar ist, **dadurch gekennzeichnet, dass** der Kolben (26) eine Membran (36) umfasst, die undurchlässig für ein erstes Fluid, aber offen für ein zweites Fluid ist, wobei die Membran den ersten und den zweiten Anschluss voneinander trennt, wobei die Membran (36) undurchlässig für eine Flüssigkeit und offen für ein Gas oder Gasgemisch ist.

2. Druckanzeigeeinrichtung nach Anspruch 1, **dadurch gekennzeichnet, dass** die Membran (36) offen für Luft, aber undurchlässig für Wasser oder Öl ist.

3. Druckanzeigeeinrichtung nach einem der vorangehenden Ansprüche, **dadurch gekennzeichnet, dass** der zweite Anschluss geeignet ist mit der Umgebung/Atmosphäre eine kommunizierende Verbindung herzustellen.

4. Druckanzeigeeinrichtung nach einem der vorangehenden Ansprüche, **dadurch gekennzeichnet, dass** die Vorspannung durch eine Spiralfeder (28) erzeugt wird, die auf die Kolbenringfläche (38) wirkt.

5. Druckanzeigeeinrichtung nach einem der vorangehenden Ansprüche, **dadurch gekennzeichnet, dass** der Kolben (26) eine Kolbenstange (27) umfasst, die als Anzeigeelement dient, so dass bei komprimiertem Vorspannelement die Kolbenstange (27) einen außerhalb des Zylinders sichtbaren Bereich bildet.

6. Druckanzeigeeinrichtung nach Anspruch 5, **dadurch gekennzeichnet, dass** ein Rastmittel mit dem Kolben derart zusammenwirkt, dass dieser in einem Anzeige-Zustand arretiert wird und damit auch bei Druckabnahme im Anzeige-Zustand verbleibt.

7. Stellarmatur (40) umfassend einen Membranantrieb (42), der wenigstens eine mit einer Ventilstange (46) verbundene Antriebsmembran (48) aufweist, die eine Antriebskammer (44), die mit einem Antriebsfluid beaufschlagbar ist und ferner eine durch die Antriebsmembran (48) abgetrennte zweite Kammer (50) aufweist, deren Volumen mit einer Druckanzeigeeinrichtung (20) gemäß einem der vorangehenden Ansprüche fluidisch verbunden ist.

8. Stellarmatur nach Anspruch 7, **dadurch gekennzeichnet, dass** die zweite Kammer (50) zwischen einer ersten Antriebsmembran (48) und einer zweiten Antriebsmembran liegt.

9. Stellarmatur nach Anspruch 7 oder 8, **dadurch gekennzeichnet, dass** der Membranantrieb (42) ein hydraulischer Membranantrieb ist und das Antriebsfluid eine Flüssigkeit.

## Claims

1. Pressure indication device (20) for indicating a pressure in a first fluidic system, which pressure indication device (20) has a first connection (24) for fluidically connecting it to the first system, the pressure indication device (20) further comprises a cylinder (22) that houses a piston (26) which latter is biased in the axial direction and can be moved within the cylinder (20), with a fluid contained in the first fluidic system being capable of acting on the piston surface (30), which piston (26) has an opening (32) in its piston surface (30) which opening (32) can be connected to a second system for communication therewith, by means of a second connection, **characterized in that** the piston (26) comprises a diaphragm (36) which is impermeable to a first fluid but permeable to a second fluid, which diaphragm separates the first connection from the second connection, which diaphragm (36) is impermeable to a liquid and permeable to a gas or a gaseous mixture.

2. Pressure indication device according to claim 1, **characterized in that** the diaphragm (36) is air permeable but impermeable to water or oil.

3. Pressure indication device according to one of the preceding claims, **characterized in that** the second connection is suitable for establishing a connection that communicates with the environment/atmosphere.

4. Pressure indication device according to one of the preceding claims, **characterized in that** the bias is generated by a helical spring (28) which acts on the piston ring surface (38).

5. Pressure indication device according to one of the preceding claims, **characterized in that** the piston (26) comprises a piston rod (27) which serves as an indication device, with the result that when the bias element is compressed, the piston rod (27) will form a region that is visible outside the cylinder.

6. Pressure indication device according to claim 5, **characterized in that** a latching means cooperates with the piston so as to lock the piston in an indicating sate to ensure that the piston will remain in its indicating state when the pressure drops.

7. Control valve (40) comprising a diaphragm actuator (42) which has at least one drive diaphragm (48) connected to a valve rod (46), which drive diaphragm (48) includes a drive chamber (44) that can be subjected to the action of a drive fluid, and furthermore a second chamber (50) that is separated by the drive diaphragm (48) and whose volume is fluidically connected to a pressure indication device (20) according to one of the preceding claims.

8. Control valve according to claim 7, **characterized in that** the second chamber (50) is located between a first drive diaphragm (48) and a second drive diaphragm.

9. Control valve according to claim 7 or 8, **characterized in that** the diaphragm actuator (42) is a hydraulic diaphragm actuator and the drive fluid is a liquid.

## Revendications

1. Dispositif d'affichage de pression (20) destiné à afficher une pression dans un premier système fluidique, dans lequel le dispositif d'affichage de pression (20) comprend un premier raccord (24) afin d'être en liaison fluidique avec le premier système, le dispositif d'affichage de pression (20) comprend en outre un cylindre (22) dans lequel un piston (26) est logé mobile et précontraint dans la direction axiale, un fluide situé dans le premier système fluidique pouvant agir sur la surface de piston (30), le piston (26) comprenant dans sa surface de piston (30) une ouverture (32) qui peut être reliée par un deuxième raccord au deuxième système de manière à communiquer avec celui-ci, **caractérisé en ce que** le piston (26) comporte une membrane (36) qui est étanche à un premier fluide, mais qui est ouverte à un deuxième fluide, la membrane séparant le premier raccord et le deuxième raccord l'un de l'autre, la membrane (36) étant étanche à un liquide et ouverte à un gaz ou à un mélange de gaz.

2. Dispositif d'affichage de pression selon la revendication 1, **caractérisé en ce que** la membrane (36) est ouverte à l'air, mais étanche à l'eau ou à l'huile.

3. Dispositif d'affichage de pression selon l'une quelconque des revendications précédentes, **caractérisé en ce que** le deuxième raccord est adapté à établir une liaison de communication avec l'environnement/l'atmosphère.

4. Dispositif d'affichage de pression selon l'une quelconque des revendications précédentes, **caractérisé en ce que** la précontrainte est produite par un ressort spiral (28) qui agit sur la surface annulaire de piston (38).

5. Dispositif d'affichage de pression selon l'une quelconque des revendications précédentes, **caractérisé en ce que** le piston (26) comporte une tige de piston (27) qui sert d'élément d'affichage, de sorte que lorsque l'élément de précontrainte est comprimé, la tige de piston (27) forme une zone visible à l'extérieur du cylindre.

6. Dispositif d'affichage de pression selon la revendication 5, **caractérisé en ce qu'**un moyen d'encliquetage coopère avec le piston de telle manière que celui-ci est bloqué dans un état d'affichage et reste donc dans l'état d'affichage y compris en cas de diminution de pression.

7. Vanne de réglage (40) comprenant un entraînement à membrane (42) comportant au moins une membrane d'entraînement (48) qui est reliée à une tige de soupape (46) et qui comprend une chambre d'entraînement (44), laquelle peut être soumise à l'action d'un fluide d'entraînement, et en outre une deuxième chambre (50) séparée par la membrane d'entraînement (48), deuxième chambre dont le volume est en liaison fluidique avec un dispositif d'affichage de pression (20) selon l'une quelconque des revendications précédentes.

8. Vanne de réglage selon la revendication 7, **caractérisée en ce que** la deuxième chambre (50) se situe entre une première membrane d'entraînement (48) et une deuxième membrane d'entraînement.

9. Vanne de réglage selon la revendication 7 ou 8, **caractérisée en ce que** l'entraînement à membrane (42) est un entraînement à membrane hydraulique et le fluide d'entraînement est un liquide.
